# EUROPEAN PATENT APPLICATION

(11) **EP 4 542 728 A1**
(43) Date of publication of application: **23.04.2025**
(21) Application number: 23843122.5
(22) Date of filing: 14.04.2023
(51) Int. Cl.: H01M 10/52, H01M 50/30, H01M 50/186, H01M 50/105, H01M 10/04

(54) **BATTERY CASE, BATTERY, AND METHOD FOR MANUFACTURING BATTERY**

(30) Priority: 22.07.2022 KR 20220091375
(71) Applicant: SK On Co., Ltd., Seoul 03161 (KR)
(72) Inventor: JO, Yoon Ji, Daejeon 34124 (KR); KIM, Hyun Ji, Daejeon 34124 (KR); LEE, Jong Hyeok, Daejeon 34124 (KR); HWANG, Chang Mook, Daejeon 34124 (KR)
(74) Representative: Prüfer & Partner mbB Patentanwälte · Rechtsanwälte
(86) International application number: PCT/KR2023/005111
(87) International publication number: WO 2024/019262

(57) **Abstract**

The present disclosure relates to a battery case, a battery, and a method for manufacturing a battery, the battery case comprising an adsorbent compartment formed by a sealing part and an adsorbent in a space of a degassing part in order to reduce the production cost of the battery and improve the efficiency of the battery manufacturing process.

## Description

### [Technical Field]

The present disclosure relates to a battery case, a battery, and a method for manufacturing the battery, the battery case including an adsorbent within a space of a degassing portion and an adsorbent compartment formed by a sealing portion.

### [Background Art]

As the electronics, communications, and space industries develop, demand for lithium secondary batteries as an energy power source is drastically increasing. In particular, as the importance of global eco-friendly policies is emphasized, the electric vehicle market is growing swiftly, and research and development on lithium secondary batteries are being actively conducted worldwide.

Secondary batteries are classified into pouch type, cylindrical type, and prismatic type depending on the material of the case that accommodates an electrode assembly. A pouch type accommodates an electrode assembly in a pouch made of a flexible polymer material with an irregular shape. An electrode assembly accommodated in a pouch undergoes a degassing operation to remove an internal gas formed in the initial formation process, and a pouch type case requires a space for a degassing portion.

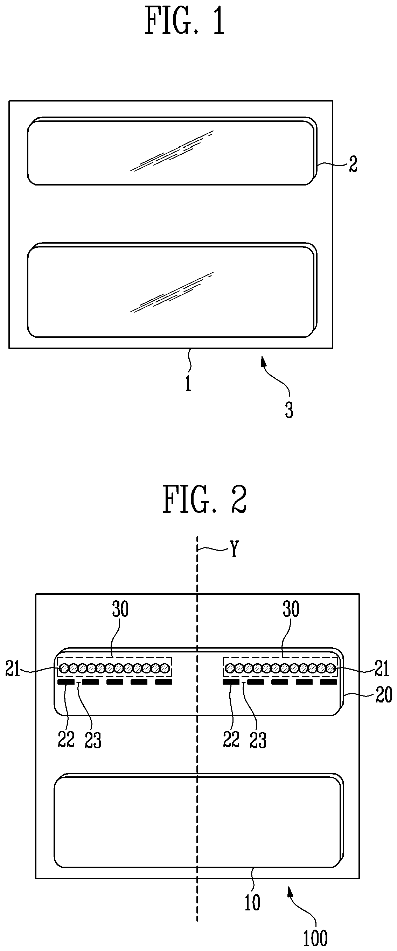

FIG. 1 schematically illustrates the structure of a conventional battery case. Referring to FIG. 1, the battery case 3 includes an electrode assembly accommodating portion 1 for accommodating an electrode assembly and a degassing portion 2 for performing a degassing operation. In the battery case 3, the degassing portion 2 corresponds to the amount of waste that is cut and discarded after the degassing operation. Recently, as the energy density of secondary batteries increases, the size of the battery case is also gradually increasing, and in proportion to this, the area used for a degassing portion is also expanding.

However, as the area used for a degassing portion increases, the amount of waste that is cut and discarded from the battery case also increases, which increases the battery production cost and reduces the efficiency of the battery manufacturing process.

Therefore, a technology is required that can reduce the area of the degassing portion wasted in the battery case, thereby reducing the battery production cost and improving the efficiency of the battery manufacturing process.

### [Disclosure]

### [Technical Problem]

The present disclosure provides a battery case including an adsorbent within a space of a degassing portion and an adsorbent compartment formed by a sealing portion, a battery, and a method for manufacturing a battery the battery, in order to reduce the battery production cost and improve the efficiency of the battery manufacturing process.

### [Technical Solution]

A battery case according to the present disclosure includes an electrode assembly accommodating portion, a degassing portion formed on one side of the electrode assembly accommodating portion and including an adsorbent, and an adsorbent compartment formed by a sealing portion within a space of the degassing portion.

In one embodiment of the present disclosure, the adsorbent may include one or more selected from the group consisting of silica gel, activated carbon, zeolite, carbon fiber, CaO, BaO, MgSO₄, Mg(ClO₄)₂, MgO, P₂O₅, Al₂O₃, CaH₂, NaH, LiAlH₄, CaSO₄, Na₂SO₄, CaCO₃, K₂CO₃, and CaCl₂.

In one embodiment of the present disclosure, the sealing portion may be formed in a plural number, and a plurality of unsealed portions may be each formed between the plurality of sealing portions.

In one embodiment of the present disclosure, the adsorbent compartment may include the adsorbent.

In one embodiment of the present disclosure, the sealing portion may be formed symmetrically based on an axis passing through the center of the battery case.

In one embodiment of the present disclosure, the sealing portion may be formed in a direction perpendicular to the direction of an axis passing through the center of the battery case.

In one embodiment of the present disclosure, the sealing portion may be formed in parallel with the direction of an axis passing through the center of the battery case.

In one embodiment of the present disclosure, the degassing portion may include a degassing hole.

In one embodiment of the present disclosure, the degassing hole may be formed in a plural number.

A battery according the present disclosure includes: a battery case according to the embodiment; and an electrode assembly accommodated in an electrode assembly accommodating portion of the battery case, and including a cathode, an anode, and a separator interposed between the cathode and the anode; and includes a structure in which a degassing portion of the battery case has been removed.

In one embodiment of the present disclosure, the electrode assembly may be electrically connected to an electrode tab.

A method for manufacturing a battery according to the present disclosure includes: (a) preparing a battery case according to the embodiment; (b) accommodating an electrode assembly in an electrode assembly accommodating portion of the battery case; (c) injecting an electrolyte into the battery case and sealing an outer periphery of the battery case; (d) performing a degassing operation by activating the electrode assembly; and (e) removing a degassing portion of the battery case.

In one embodiment of the present disclosure, the Step (d) may include: (d-1) activating the electrode assembly; and (d-2) forming a degassing hole at the degassing portion of the battery case.

In one embodiment of the present disclosure, the Step (d) may be performing a degassing operation by erecting the battery case upright.

In one embodiment of the present disclosure, the Step (e) may include: (e-1) sealing at least a part of a boundary area of the electrode assembly accommodating portion and the degassing portion; and (e-2) removing the degassing portion of the battery case.

### [Advantageous Effects]

The present disclosure can reduce the emission of a gas that is harmful to the human body by removing a gas generated during an activation operation of an electrode assembly by including an adsorbent in a degassing portion, and thus has the effect of improving the lifetime characteristics of a battery. In addition, the present disclosure can reduce the area used for the degassing portion of a battery case, and thus has the effect of reducing the battery production cost and improving the efficiency of the battery manufacturing process.

The present disclosure includes an adsorbent compartment formed by a sealing portion within a space of a degassing portion, and by disposing an adsorbent in the adsorbent compartment, the problem of the adsorbent flowing into a degassing hole through which a gas is discharged or into an electrode assembly accommodating portion is prevented, and thus has the effect that a gas generated during the activation operation of the electrode assembly can be smoothly discharged.

The present disclosure allows for performing a degassing operation by erecting a battery case accommodating an electrode assembly upright, and thus has the effect that the amount of electrolyte leaking from the inside to the outside of the battery case is reduced.

### [Description of Drawings]

FIG. 1 schematically illustrates the structure of a conventional battery case.
FIG. 2 schematically illustrates the structure of a battery case according to one embodiment of the present disclosure.
FIG. 3 schematically illustrates the structure of a battery case according to another embodiment of the present disclosure.
FIG. 4 schematically illustrates the structure of a battery case in which a degassing hole is formed.
FIG. 5 schematically illustrates the structure of a battery according to one embodiment of the present disclosure.
FIG. 6 schematically illustrates a flowchart of a method for manufacturing a battery according to one embodiment of the present disclosure.
FIG. 7 schematically illustrates a battery case according to one embodiment of the present disclosure.
FIG. 8 schematically illustrates a battery case accommodating an electrode assembly.
FIG. 9 schematically illustrates a battery case in which an electrolyte is injected and an outer periphery of which is sealed.
FIG. 10 schematically illustrates a battery case in which a degassing hole is formed.
FIG. 11 schematically illustrates a structure in which a battery case accommodating an electrode assembly is horizontally disposed in a degassing operation.
FIG. 12 schematically illustrates a structure in which a battery case accommodating an electrode assembly is disposed erectly in a degassing operation.
FIG. 13 schematically illustrates a battery from which a degassing portion has been removed.

### [Modes of the Invention]

The structural or functional descriptions of embodiments disclosed in the present specification or application are merely illustrated for the purpose of explaining embodiments according to the technical principle of the present invention, and embodiments according to the technical principle of the present invention may be implemented in various forms in addition to the embodiments disclosed in the specification or application. In addition, the technical principle of the present invention is not construed as being limited to the embodiments described in the present specification or application.

Hereinafter, a battery case, a battery, and a method for manufacturing the battery according to the present disclosure are described in detail.

A battery case according to the present disclosure includes an electrode assembly accommodating portion, a degassing portion formed on one side of the electrode assembly accommodating portion and including an adsorbent, and an adsorbent compartment formed by a sealing portion within a space of the degassing portion.

FIG. 2 schematically illustrates the structure of a battery case according to one embodiment of the present disclosure.

Referring to FIG. 2, a battery case 100 according to the present disclosure includes an electrode assembly accommodating portion 10. The battery case 100 may be a pouch made of a flexible material. The electrode assembly accommodating portion 10 may be formed into a pocket shape by drawing and forming the battery case 100 to elongate a part of the battery case 100. The electrode assembly accommodating portion 10 may prevent an electrode assembly from being separated to the outside of the battery case 100.

The battery case 100 according to the present disclosure includes a degassing portion 20 formed on one side of the electrode assembly accommodating portion 10. The degassing portion 20 is a space for performing a degassing operation in a battery formation process.

The battery case 10 according to the present disclosure includes an adsorbent 21 in the degassing portion 20. The electrode assembly is activated through a formation process, and a gas generated inside the battery case 100 may be removed through a degassing operation. The gas may be generated during the formation of a solid electrolyte interphase (SEI) film at an anode in the electrode assembly, and for example, the gas may be CO, CO₂, H₂, C₂H₂, C₂H₄, or the like. An adsorbent 21 may adsorb gases such as CO, CO₂, H₂, C₂H₂, and C₂H₄ generated during the activation operation of the electrode assembly. The degassing portion 20 in the present disclosure includes an adsorbent 21, thereby reducing the emission of a gas harmful to the human body. In addition, the battery case 100 according to the present disclosure may reduce the area used for a degassing portion compared to a conventional one (see the degassing portion 2 of FIG. 1 and the degassing portion 20 of FIG. 2), so that the battery production cost can be reduced and the efficiency of the battery manufacturing process can be improved.

An adsorbent 21 may be an organic or inorganic substance capable of adsorbing a gas, and may be in the form of particles having pores as needed. For example, an adsorbent 21 may include one or more selected from the group consisting of silica gel, activated carbon, zeolite, carbon fiber, CaO, BaO, MgSO₄, Mg(ClO₄)₂, MgO, P₂O₅, Al₂O₃, CaH₂, NaH, LiAlH₄, CaSO₄, Na₂SO₄, CaCO₃, K₂CO₃, and CaCl₂.

The battery case 100 according to the present disclosure includes an adsorbent compartment 30 formed by a sealing portion 22 within a space of a degassing portion 20. The adsorbent compartment 30 formed by the sealing portion 22 may include an adsorbent 21. Specifically, the adsorbent 21 may be settled in the adsorbent compartment 30 formed by the sealing portion 22, and an electrolyte and a gas may flow by an unsealed portion 23. By disposing the adsorbent 21 in the adsorbent compartment 30, the problem of the adsorbent flowing into a degassing hole through which a gas is discharged or into an electrode assembly accommodating portion is prevented, and thus a gas generated during the activation operation of the electrode assembly can be smoothly discharged.

The sealing portion 22 may be formed in multiple pieces, and a plurality of unsealed portions 23 may be each formed between the plurality of sealing portions 22. The length of each of the plurality of sealing portions 22 may be the same, and the length of each sealing portion (22) may vary depending on the dimensions of the degassing portion 20. Preferably, the sealing portion 22 may have a length that is long enough not to be easily broken during a degassing operation, and may have a short length that is short enough to facilitate gas discharge.

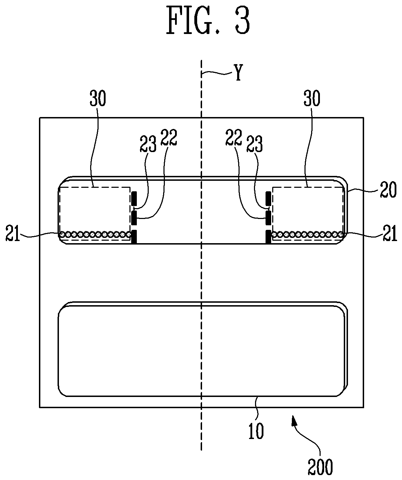

The sealing portion 22 may be formed symmetrically based on the axis (Y-axis) passing through the center of the battery case 100. In addition, the sealing portion 22 may be formed in a direction perpendicular to the direction of the axis (Y-axis) passing through the center of the battery case 100. In addition, FIG. 3 schematically illustrates the structure of a battery case according to another embodiment of the present disclosure, and referring to FIG. 3, the sealing portion 22 may be formed in parallel with the direction of the axis (Y-axis) passing through the center of the battery case 200.

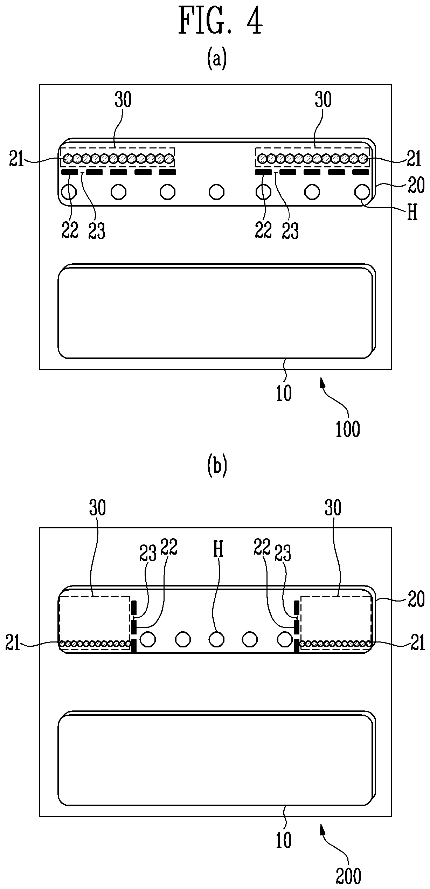

FIG. 4 schematically illustrates the structure of a battery case in which a degassing hole is formed.

Referring to FIG. 4, the battery case 100 and 200 may include a degassing hole H in the degassing portion 20. A gas that is not adsorbed on an adsorbent 21 may be discharged to the outside of the battery case 100 and 200 through the degassing hole H. The degassing hole H may be formed in a space outside the adsorbent compartment 30. The degassing hole H may be formed in a plural number, and each of the plurality of degassing holes H may be formed to be spaced apart from each other at predetermined intervals. The degassing hole H may be formed by punching in a shape such as a Y-shape, a cross, an asterisk, a circle, a square, and the like.

The battery according the present disclosure includes: a battery case; and an electrode assembly accommodated in an electrode assembly accommodating portion of the battery case, and including a cathode, an anode, and a separator interposed between the cathode and the anode; and includes a structure in which a degassing portion of the battery case has been removed.

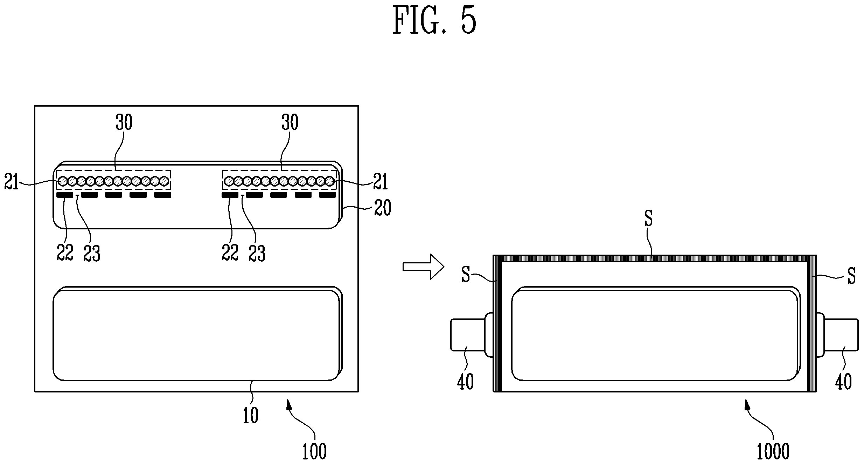

FIG. 5 schematically illustrates the structure of a battery according to one embodiment of the present disclosure.

Referring to FIG. 5, a battery 1000 according to the present disclosure includes: a battery case 100; and an electrode assembly accommodated in an electrode assembly accommodating portion 10 of the battery case 100. The battery case 100 and the electrode assembly accommodating portion 10 may be the same as the battery case 100 and the electrode assembly accommodating portion 10 described above with reference to FIG. 2.

An electrode assembly may include a cathode, an anode, and a separator interposed between the cathode and the anode. A cathode may include a cathode active material which lithium (Li) ions may be inserted to and extracted from, and an anode may include an anode active material which lithium (Li) ions may be absorbed to and extracted from. In addition, a cathode and an anode may further include a binder and a conductive material in each of a cathode active material and an anode active material to improve mechanical stability and electrical conductivity. A separator may be configured to prevent electrical short-circuit between a cathode and an anode and to generate a flow of ions. The type of the separator is not particularly limited, but may include a porous polymer film. An electrode assembly may be manufactured by alternately stacking a plurality of cathodes and anodes and interposing separators between the cathodes and anodes, by a stacking or zigzag stacking method.

A battery cell 1000 may further include an electrolyte in a battery case 100. An electrolyte may be a non-aqueous electrolyte. An electrolyte may include a lithium salt and an organic solvent. For example, the organic solvent may include one or more selected from the group consisting of propylene carbonate (PC), ethylene carbonate (EC), diethyl carbonate (DEC), dimethyl carbonate (DMC), ethylmethyl carbonate (EMC), methylpropyl carbonate (MPC), dipropyl carbonate (DPC), vinylene carbonate (VC), dimethyl sulfoxide, acetonitrile, dimethoxyethane, diethoxyethane, sulfolane, gamma-butyrolactone, propylene sulfide, and tetrahydrofuran.

The electrode assembly may be electrically connected to an electrode tab 40. The electrode tab 40 may include a metal having good electrical conductivity, and may include, for example, at least one of aluminum, copper, nickel, and steel use stainless (SUS). The electrode tab 40 may consist of the same material as a current collector to which the electrode tab 40 is attached. For example, an electrode tab 40 attached to an anode current collector mainly composed of copper may include copper as a main component. In addition, an electrode tab 40 attached to a cathode current collector mainly composed of aluminum may include aluminum as a main component. As needed, a film may be provided between an electrode tab 40 and a battery case 100 to prevent a short circuit from occurring between the electrode tab 40 and a metal layer of the battery case 100. The film may be an insulating or heat-sealable film, and may include, for example, one or more materials selected from polyimide, polypropylene, polyethylene, and polyethylene terephthalate.

A battery 1000 has a structure in which a degassing portion 20 has been removed from a battery case 100 after removing a gas generated during the activation operation of an electrode assembly. The battery 1000 may have a sealing area S formed on an outer periphery to prevent the electrode assembly from being separated from the electrode assembly accommodating portion 10.

A method for manufacturing a battery according to the present disclosure includes: (a) preparing a battery case according to the embodiment; (b) accommodating an electrode assembly in an electrode assembly accommodating portion of the battery case; (c) injecting an electrolyte into the battery case and sealing an outer periphery of the battery case; (d) performing a degassing operation by activating the electrode assembly; and (e) removing a degassing portion of the battery case.

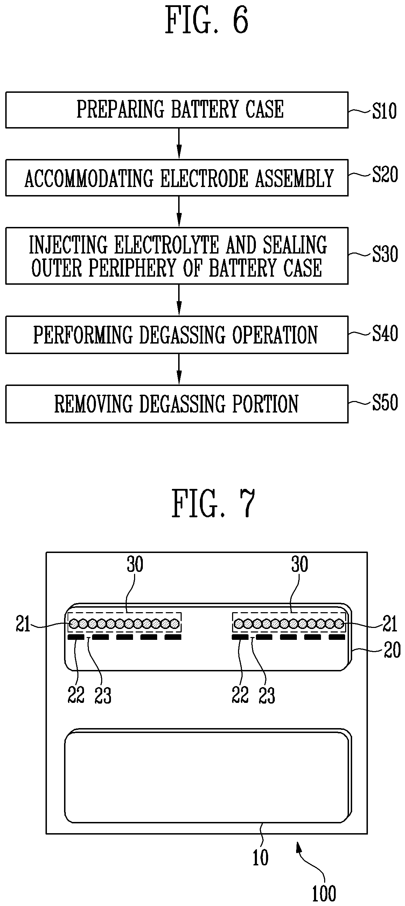

FIG. 6 schematically illustrates a flowchart of a method for manufacturing a battery according to one embodiment of the present disclosure; and FIG. 7 schematically illustrates a battery case according to one embodiment of the present disclosure.

Referring to FIGS. 6 and 7, the manufacturing method according to the present disclosure includes preparing a battery case S10. In Step S10, a battery case 100 including an electrode assembly accommodating portion 10, a degassing portion 20, an adsorbent 21, and an adsorbent compartment 30 is prepared. The battery case 100 including the electrode assembly accommodating portion 10, the degassing portion 20, the adsorbent 21, and the adsorbent compartment 30 may be the same as the battery case 100 including the electrode assembly accommodating portion 10, the degassing portion 20, the adsorbent 21, and the adsorbent compartment 30 described above with reference to FIG. 2. The battery case 100 may include a water-resistant resin, and may be, for example, in the form of a film in which a polyolefin-based resin, a metal, a nylon resin, and a polyterephthalate resin are laminated.

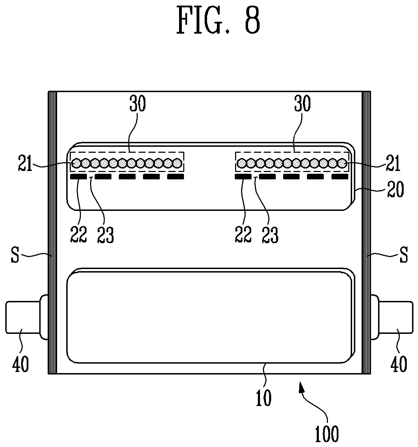

FIG. 8 schematically illustrates a battery case accommodating an electrode assembly.

Referring to FIGS. 6 and 8, the manufacturing method according to the present disclosure includes accommodating an electrode assembly S20. In Step S20, the electrode assembly is accommodated in the electrode assembly accommodating portion 10 of the battery case 100. In addition, the electrode assembly may be accommodated such that the electrode tab 40 may be exposed to the outside of the battery case 100. After accommodating the electrode assembly in the electrode assembly accommodating portion 10, a sealing area S may be formed on an outer periphery to prevent the electrode assembly from being separated to the outside of the battery case 100.

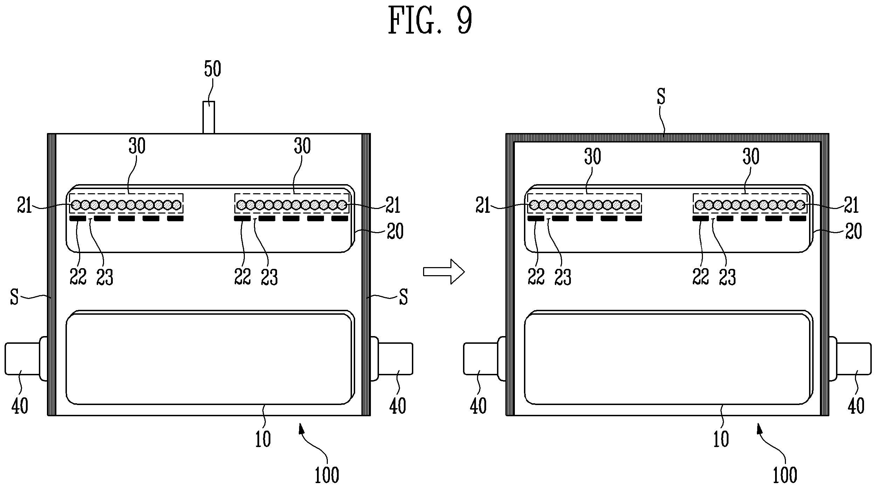

FIG. 9 schematically illustrates a battery case in which an electrolyte is injected and an outer periphery of which is sealed.

Referring to FIGS. 6 and 9, the manufacturing method according to the present disclosure includes injecting an electrolyte injection and sealing the outer periphery of the battery case S30. In Step S30, an electrolyte is injected into the battery case 100, and an outer periphery of the battery case 100 is sealed. The electrolyte may be injected into the battery case 100 through an electrolyte injection portion 50. Since an electrolyte flows from top to bottom by gravity, the electrolyte may preferably be injected from top to bottom of the battery case 100. In addition, the electrolyte may be injected when the battery case 100 is disposed such that the electrolyte injection portion 50 faces upward to prevent the electrolyte from leaking. After the electrolyte is completely injected into the battery case 100, an outer periphery of the battery case 100 provided with the electrolyte injection portion 50 may be sealed to form a sealing area S.

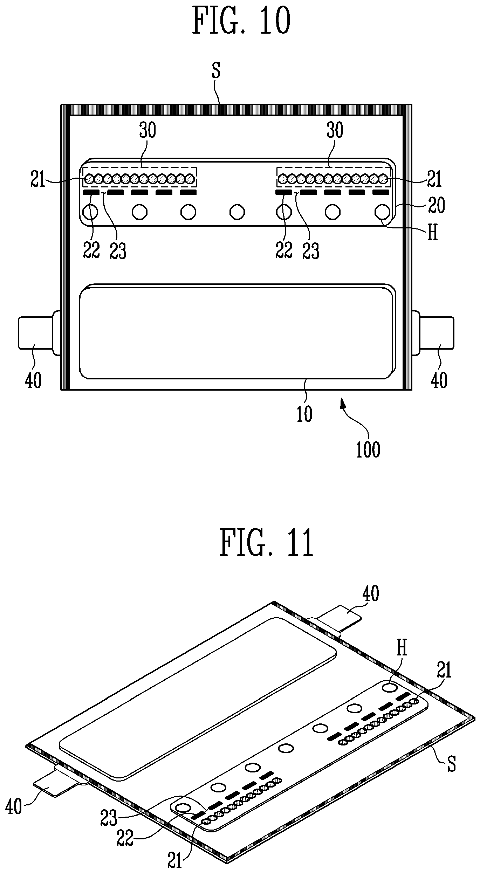

FIG. 10 schematically illustrates a battery case in which a degassing hole is formed.

Referring to FIGS. 6 and 10, the manufacturing method according to the present disclosure includes of performing a degassing operation S40. In Step S40, the electrode assembly is activated to perform the degassing operation. In addition, Step S40 may include activating the electrode assembly and forming a degassing hole H at the degassing portion 20 of the battery case 100.

The formation process of an electrode assembly is a process for completing charging so that the electrode assembly may supply power. Since the formation process is performed after a battery case 100 is completely sealed, the charging rate is high, and a gas can be discharged efficiently to complete the manufacturing of the battery within a preset process time.

When the formation process is completed, a gas may be generated inside the battery case 100. The gas may be generated during the formation of an SEI film at an anode in the battery, and the gas may be CO, CO₂, H₂, C₂H₂, C₂H₄, or the like. An adsorbent 21 may adsorb gases such as such as CO, CO₂, H₂, C₂H₂, and C₂H₄ that may be generated during the formation process.

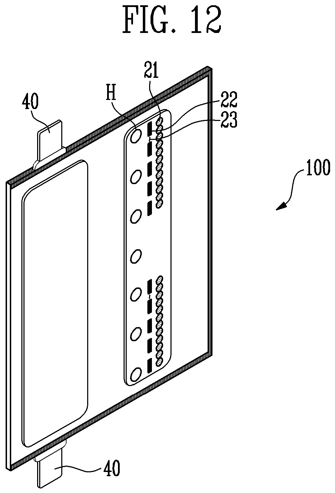

A degassing hole H may be formed at the degassing portion 20 of the battery case 100 by a piercing operation using a knife or the like. The degassing hole H may be formed in a shape such as a Y-shape, a cross, an asterisk, a circle, a square, and the like. A degassing operation in which a gas that is not adsorbed on an adsorbent is discharged to the outside of the battery case 100 through the degassing hole H may be performed. FIG. 11 schematically illustrates a structure in which a battery case accommodating an electrode assembly is horizontally disposed in a degassing operation; and FIG. 12 schematically illustrates a structure in which a battery case accommodating an electrode assembly is disposed erectly in a degassing operation. Referring to FIGS. 11 and 12, a degassing operation is generally performed by horizontally disposing a battery case accommodating an electrode assembly, placing it into a chamber, and then removing a gas. This is to smoothly discharge a gas generated inside the battery case to the outside of the battery case. However, because the battery case was disposed horizontally, there was a problem that a large amount of electrolyte leaked through the degassing hole. The method for manufacturing a battery according to the present disclosure can reduce the amount of gas discharged to the outside of the battery case and prevent the phenomenon that the adsorbent flows into the degassing hole, by using a battery case including an adsorbent that adsorbs a gas generated inside the battery case before an degassing operation and an adsorbent compartment in which the position of the adsorbent may be fixed by a sealing portion. Therefore, the degassing operation may be performed by erecting the battery case upright so that the amount of electrolyte leaking through the degassing hole can be reduced.

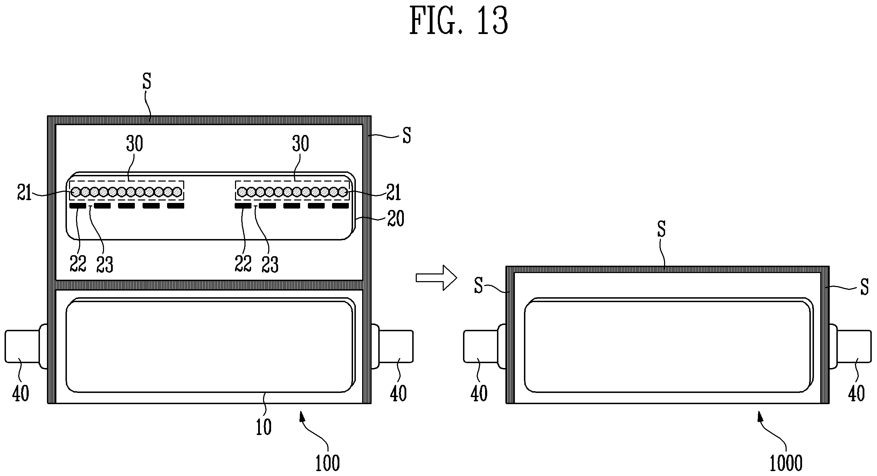

FIG. 13 schematically illustrates a battery from which a degassing portion has been removed.

Referring to FIGS. 6 and 13, the manufacturing method according to the present disclosure includes removing a degassing portion S50. Step S50 may include a sealing at least a part of a boundary area between the electrode assembly accommodating portion 10 and the degassing portion 20, and removing the degassing portion 20 from the battery case 100. After the degassing operation, the electrolyte inside the battery case 100 may leak through a degassing hole H formed at the degassing portion 20. Therefore, after sealing between the electrode assembly accommodating portion 10 and the degassing portion 20, a cutting line may be set in a part of the sealed area including the degassing portion 20 to remove the degassing portion 20. By removing the degassing portion 20, the manufacturing of the battery 1000 according to one embodiment of the present disclosure may be completed.

## Claims

1. A battery case comprising:
an electrode assembly accommodating portion;
a degassing portion formed on one side of the electrode assembly accommodating portion and including an adsorbent; and
an adsorbent compartment formed by a sealing portion within a space of the degassing portion.

2. The battery case according to claim 1, wherein the adsorbent includes one or more selected from the group consisting of silica gel, activated carbon, zeolite, carbon fiber, CaO, BaO, MgSO₄, Mg(ClO₄)₂, MgO, P₂O₅, Al₂O₃, CaH₂, NaH, LiAlH₄, CaSO₄, Na₂SO₄, CaCO₃, K₂CO₃, and CaCl₂.

3. The battery case according to claim 1, wherein the sealing portion is formed in a plural number, and a plurality of unsealed portions are each formed between the plurality of sealing portions.

4. The battery case according to claim 1, wherein the adsorbent compartment includes the adsorbent.

5. The battery case according to claim 1, wherein the sealing portion is formed symmetrically based on an axis passing through the center of the battery case.

6. The battery case according to claim 1, wherein the sealing portion is formed in a direction perpendicular to the direction of an axis passing through the center of the battery case.

7. The battery case according to claim 1, wherein the sealing portion is formed in parallel with the direction of an axis passing through the center of the battery case.

8. The battery case according to claim 1, wherein the degassing portion includes a degassing hole.

9. The battery cell according to claim 8, wherein the degassing hole is formed in a plural number.

10. A battery comprising:
a battery case of claim 1; and
an electrode assembly accommodated in an electrode assembly accommodating portion of the battery case, and including a cathode, an anode, and a separator interposed between the cathode and the anode;
wherein a degassing portion of the battery case has been removed.

11. The battery according to claim 10, wherein the electrode assembly is electrically connected to an electrode tab.

12. A method for manufacturing a battery, comprising:
(a) preparing a battery case of claim 1;
(b) accommodating an electrode assembly in an electrode assembly accommodating portion of the battery case;
(c) injecting an electrolyte into the battery case and sealing an outer periphery of the battery case;
(d) performing a degassing operation by activating the electrode assembly; and
(e) removing a degassing portion of the battery case.

13. The method according to claim 12, wherein the Step (d) includes:
(d-1) activating the electrode assembly; and
(d-2) forming a degassing hole at the degassing portion of the battery case.

14. The method according to claim 12, wherein the Step (d) is performing a degassing operation by erecting the battery case upright.

15. The method according to claim 12, wherein the Step (e) includes:
(e-1) sealing at least a part of a boundary area of the electrode assembly accommodating portion and the degassing portion; and
(e-2) removing the degassing portion of the battery case.
